# EUROPÄISCHE PATENTSCHRIFT

(11) **EP 1 532 797 B1**
(45) Veröffentlichungstag und Bekanntmachung des Hinweises auf die Patenterteilung: **03.01.2007**
(21) Anmeldenummer: 03790653.4
(22) Anmeldetag: 25.07.2003
(51) Int. Cl.: H04L 29/08

(54) **VERFAHREN ZUM ÜBERTRAGEN VON NUTZDATENOBJEKTEN GEMÜSS EINEM PROFILINFORMATIONSOBJEKT**
METHOD FOR THE TRANSMISSION OF USER DATA OBJECTS ACCORDING TO A PROFILE INFORMATION OBJECT
PROCEDE DE TRANSMISSION D'OBJETS DE DONNEES UTILES D'APRES UN OBJET D'INFORMATIONS DE PROFIL

(30) Priorität: 26.08.2002 DE 10239061
(43) Veröffentlichungstag der Anmeldung: 25.05.2005
(73) Patentinhaber: SIEMENS AKTIENGESELLSCHAFT, 80333 München (DE)
(72) Erfinder: SCHLÜTER, Marc, 38102 Braunschweig (DE); SCHMIDT, Andreas, 38124 Braunschweig (DE); SCHWAGMANN, Norbert, 38102 Braunschweig (DE); TRAUBERG, Markus, 38159 Velchede (DE)
(86) Internationale Anmeldenummer: PCT/DE2003/002525
(87) Internationale Veröffentlichungsnummer: WO 2004/021676

(56) Entgegenhaltungen:
- US-A1- 2002 078 253
- WAP FORUM: "WAG UAProf Version 20-Oct-2001" WIRELESS APPLICATION PROTOCOL, [Online] 20. Oktober 2001 (2001-10-20), Seiten 1-86, XP002258494 Gefunden im Internet: <URL:http://www.wapforum.org/> [gefunden am 2003-10-16]

## Beschreibung

Die vorliegende Erfindung betrifft ein Verfahren zum Übertragen von Nutzdatenobjekten von einer Datenbereitstellungskomponente bzw. einem Datenserver über eine Verbindungskomponente zu einer Telekommunikationseinrichtung eines Benutzers, wobei durch jeweilige Profilinformationen in einem Profilobjekt der Datenbereitstellungskomponente mitgeteilt wird, welche Typen von Nutzdatenobjekten die Verbindungskomponente bzw. die Telekommunikationseinrichtung in der Lage ist, jeweils für sich zu verarbeiten.

Es wird derzeit ein Verfahren zum Übertragen bzw. Herunterladen von Nutzdatenobjekten von einer Datenbereitstellungskomponente bzw. einem Datenserver auf eine Telekommunikationseinrichtung, insbesondere in der Ausführung eines Mobilfunkgeräts, diskutiert. Dabei wird davon ausgegangen, dass sich die Telekommunikationseinrichtung in einem Telekommunikationsnetz in der Ausgestaltung eines Mobilfunknetzes befindet, in dem die Übertragung von Daten allgemein, insbesondere von Nutzdatenobjekten mittels eines vom WAP-Forum (WAP: Wireless Application Protocol) spezifizierten Protokolls erfolgen. Ferner wird angenommen, dass sich die Datenbereitstellungskomponente eines Daten- oder Inhalteanbieters in einem weiteren Telekommunikationsnetz befindet, das insbesondere als ein auf einem Internetprotokoll basierendes Netz ausgebildet ist. Zum Herstellen einer Datenverbindung zwischen der Datenbereitstellungskomponente und der Telekommunikationseinrichtung sind somit (mindestens) zwei unterschiedlichen Teil-Schnittstellen nötig, nämlich zum einen eine Luftschnittstelle und eine kabelgebundenen Schnittstelle. Für die Überbrückung der Luftschnittstelle ist, wie bereits erwähnt, die Verwendung von WAP-Protokollen vorgesehen. In dem Telekommunikationsnetz der Datenbereitstellungskomponente kommt hingegen beispielsweise das HTTP (HTTP: Hypertext Transfer Protocol) zum Einsatz. Da also auf der Luftschnittstelle und der Netzseite unterschiedliche Protokolle zum Einsatz kommen, ist der Einsatz einer Verbindungskomponente, hier eines sogenannten WAP-Gateways vorgesehen, das die Anpassung der Nutzdaten an die unterschiedlichen tieferen Protokoll-Schichten (Luftschnittstelle: z.B. WSP (Wireless Session Protocol) als ein WAP; Netzwerkseite: HTTP) vornimmt. Ein derartiges WAP-Gateway besitzt meist auch die Fähigkeit, Dateitypen oder -formate zu konvertieren (z.B. Umwandeln des Dateiformats "gif" in "jpeg", bei Dateien vom Typ Bild bzw. Standbild).

Telekommunikationseinrichtungen, wie Mobilfunkgeräte oder Mobiltelefone, unterscheiden sich in der Regel durch ihre charakteristischen Eigenschaften bzw. Fähigkeiten voneinander. So variieren beispielsweise die Eigenschaften der Anzeigeeinrichtungen teilweise erheblich (z.B. in Größe und Auflösung) und somit auch die Fähigkeiten, bestimmte Dateitypen bzw. Dateiformate darstellen bzw. verarbeiten zu können. Damit eine Datenbereitstellungskomponente bzw. ein Datenbereitstellungsserver in einem Netzwerk Kenntnis über die Eigenschaften bzw. Fähigkeiten einer WAP-fähigen Telekommunikationseinrichtung eines Benutzers erlangen kann, wurde vom WAP-Forum das sogenannte UA-Prof (UA-Prof: User Agent Profile) standardisiert [7], mit dessen Hilfe die Eigenschaften einer WAP-fähigen Telekommunikationseinrichtung netzwerkseitig (d.h. im Netz der Datenbereitstellungskomponente) bekannt gemacht werden können. Bei dem Verfahren werden zusätzlich auch die Fähigkeiten eines WAP-Gateways berücksichtigt, das die zwischen Telekommunikationseinrichtung und Datenbereitstellungskomponente transferierten Daten handhabt und dabei auch verändern kann. Netzwerkseitig sind damit bei der Bereitstellung geeigneter Daten durch einen Server auch die Eigenschaften des WAP-Gateways relevant.

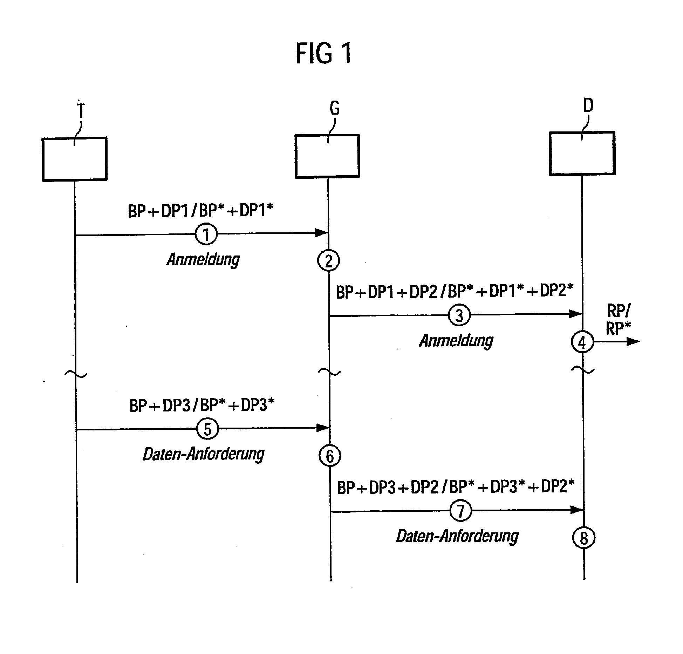

Im Folgenden soll anhand von Figur 1 für einen allgemeinen Fall beschrieben werden, wie eine Datenbereitstellungskomponente D das aktuelle UA-Prof einer WAP-fähigen Telekommunikationseinrichtung T erhält. Zunächst wird bei der Anmeldung der WAP-fähigen Telekommunikationseinrichtung T bzw. dem Aufbau einer WSP-Verbindung ein sogenanntes Basis-Profil BP oder eine Basisprofilinformation an das WAP-Gateway G übermittelt. Wenn die Eigenschaften bzw. Fähigkeiten der Telekommunikationseinrichtung T beispielsweise durch eine zusätzlich angeschlossene Leistungskomponente, wie eine zusätzliche Hardwarekomponente (z.B. Farbanzeigeeinrichtung), erweitert oder verändert worden sind, wird mit dem Basis-Profil zusätzlich noch ein Differenz-Profil DP1 oder eine erste Differenzprofilinformation als ein erstes Teilprofilinformationsobjekt an das WAP-Gateway G übermittelt, wie es durch Schritt 1 ("1" im Kreis) dargestellt ist. Beide Profile, nämlich BP und DP1, können gegebenenfalls vom WAP-Gateway G zwischengespeichert und ausgewertet werden, vgl. dazu Schritt 2. Das WAP-Gateway G kann nun seinerseits die erhaltenen Profile BP und DP1 um ein eigenes Differenz-Profil DP2 bzw. eine zweite Differenzprofilinformation ergänzen. Dies ist vorteilhaft, wenn das WAP-Gateway G über besondere Eigenschaften bzw. Fähigkeiten verfügt, die von den zuvor von der WAP-fähigen Telekommunikationseinrichtung T übermittelten Profilen BP und DP1 abweichen oder diese ergänzen. Alle (drei) Profile werden dann in Schritt 3 als ein zweites Teilprofilinformationsobjekt an die Datenbereitstellungskomponente D übermittelt. Die Datenbereitstellungskomponente D erstellt auf Basis aller übermittelten Profile (BP, DP1 und DP2) ein resultierendes Gesamtprofil oder Gesamtprofilobjekt RP für die WAP-fähige Telekommunikationseinrichtung T zusammen, wie es durch Schritt 4 angedeutet sein soll. Das Gesamtprofil RP, das die individuellen Eigenschaften der WAP-fähigen Telekommunikationseinrichtung T und die ergänzenden Fähigkeiten des WAP-Gateways G und eventueller anderen Netzwerkeinheiten enthält, ist das aktuelle UA-Prof und wird von der Datenbereitstellungskomponente D verwaltet.

Während einer WSP-Sitzung kann das Herunterladen beliebiger Daten, insbesondere Nutzdatenobjekte, von einer WAP-fähigen Telekommunikationseinrichtung T durch Absenden einer Daten-Anforderungs-Mitteilung eingeleitet werden. Falls sich die Eigenschaften bzw. Fähigkeiten der WAP-fähigen Telekommunikationseinrichtung zwischenzeitlich (d.h. nach dem ersten Aufbau einer WSP-Verbindung) geändert haben sollten, beispielsweise durch Verbindung einer anderen zusätzlichen Hardwarekomponente, wird auch bei bzw. zusammen mit einer abgesetzten Daten-Anforderungs-Mitteilung ein aktuelles angepasstes Differenzprofil DP3 oder eine dritte Differenzprofilinformation in einem ersten Teilprofilinformationsobjekt an das WAP-Gateway G in Schritt 5 übertragen und dort gemäß Schritt 6 gegebenenfalls ausgewertet. Die restliche Übertragung des Basis-Profils BP und der Differenz-Profile DP3 und DP2 in einem zweiten Teilprofilinformationsobjekt zwischen WAP-Gateway G und Datenbereitstellungskomponente D gemäß Schritt 7 und das Erstellen des Gesamtprofils gemäß Schritt 8 erfolgt analog zum oben beschriebenen Verfahren. Haben sich die Eigenschaften bzw. Fähigkeiten der WAP-fähigen Telekommunikationseinrichtung nach dem ersten Aufbau der WSP-Verbindung nicht geändert, wird bei einer abgesetzten Daten-Anforderungs-Mitteilung auf die zuvor übermittelten und im WAP-Gateway G (vgl. Schritt 2) bzw. auf der Datenbereitstellungskomponente (vgl. Schritt 4) zwischengespeicherten Profile zurückgegriffen.

Das Prinzip zur Generierung des resultierenden Profils ist sehr elegant, es wird nämlich aus dem Basisprofil und beliebig vielen Differenzprofilen das resultierende Profil bzw. Gesamtprofil generiert.

Es wird ferner die grundsätzliche Annahme bei der Verwendung und Definition des UA-Prof getroffen, dass ein WAP-Gateway die zur WAP-fähigen Telekommunikationseinrichtung übertragenen Datentypen erkennt und geeignet behandelt, d.h. gegebenenfalls auf dem Weg von der Datenbereitstellungskomponente zur Telekommunikationseinrichtung verändert bzw. konvertiert. Eine typisches Beispiel hierfür ist eine Bildkonvertierung.

Angenommen, die Telekommunikationseinrichtung kann nur Bilder vom Typ bzw. Format "jpeg" anzeigen und die Datenbereitstellungskomponente überträgt ein Bild vom Typ "gif", so kann das WAP-Gateway seinen Fähigkeiten entsprechend das Bild vom Typ "gif" in den Typ bzw. das Format "jpeg" konvertieren und das konvertierte Bild an die Telekommunikationseinrichtung weiterreichen, auf dem es anschließend verarbeitet bzw. dargestellt werden kann.

Dieses Vorgehen wird durch UA-Profs entsprechend unterstützt, indem die WAP-fähige Telekommunikationseinrichtung in seinem Basisprofil BP zunächst angibt, Bilder vom Typ "jpeg" verarbeiten bzw. anzeigen zu können. Das WAP-Gateway erkennt diese Angabe, kennt die eigene Fähigkeit, Bilder vom Typ "gif" in den Typ "jpeg" konvertieren zu können und gibt deshalb im Differenzprofil DP2 an, dass auch der Bildtyp "gif" unterstützt wird. Auf Seiten der Datenbereitstellungskomponente wird das resultierende Gesamtprofil RP generiert. Die Datenbereitstellungskomponente kann jedoch jetzt nicht mehr zwischen den ursprünglichen Fähigkeiten der Telekommunikationseinrichtung und den zusätzlichen Fähigkeiten des Gesamtsystems aus WAP-fähiger Telekommunikationseinrichtung und WAP-Gateway unterscheiden. In diesem Beispiel ist nun die serverseitige Versendung (d.h. die Versendung seitens der Datenbereitstellungskomponente) eines Bildes vom Typ "gif" möglich, wobei durch das WAP-Gateway die entsprechende Konvertierung vorgenommen wird.

Probleme können allerdings auftreten, wenn die Dateitypen, die eine Konvertierung durch das WAP-Gateway bedürfen, in anderen Datenformaten eingeschlossen (verpackt) sind, die vom WAP-Gateway nicht geeignet behandelt werden können. Diesbezüglich sind im wesentlichen zwei Beispiele zu nennen:
1. Digitale Rechteverwaltung ("Digital Rights Management":DRM): Die derzeit im WAP-Forum spezifizierte Lösung für die Verwaltung von Rechten geschützter digitaler Objekte basiert darauf, dass ein Objekt in einer Container-Datei bzw. einem Container transportiert wird, der für unverschlüsselte Objekte den Typ "application/vnd.wap.drm.message" und für verschlüsselte Objekte den Typ "application/vnd.wap.drm.content" hat. Bei den unverschlüsselten Objekten besteht theoretisch die Option, dass ein WAP-Gateway auf das eingeschlossene Objekt zugreift und es verändert, wobei dies nicht explizit vorgesehen ist. Bei verschlüsselten Objekten hat das WAP-Gateway keine Zugriffsmöglichkeit auf das Objekt, da es den Schlüssel nicht hat und die Daten daher nur als binäres Paket erscheinen. Auch wenn das eingeschlossene Objekt ein Bild eines dem WAP-Gateway bekannten Typs ist, das entsprechend in einen anderen Typ gewandelt werden könnte, ist dies in dem beschriebenen Fall nicht möglich. Das eingeschlossene Objekt würde vom WAP-Gateway unverändert an die Telekommunikationseinrichtung weitergereicht, auf der es nicht dargestellt werden könnte.
2. Multimedia Messaging Service (MMS): Im MMS wird die Nachricht in Form einer Multimedia Message (MM) von einem sogenannten MMS-Relay/Server (der als eine MMS-Vermittlungseinheit in einem Netz dient) an einen MMS-Klienten (MMS Client), eine spezielle Anwendung auf der WAP-fähigen Telekommunikationseinrichtung übertragen. Die MM ist in der vom WAP-Forum spezifizierten Lösung eine Nachricht mit binären Codes zur Darstellung der Kopffelder, die dem WAP-Gateway nicht bekannt sind. Die Nachrichten haben den Typ "application/vnd.wap.mms-message" und enthalten die zu transferierenden Objekte. Das WAP-Gateway hat wiederum keine Möglichkeit, die Objekte aus der Nachricht zu extrahieren und an die Eigenschaften der empfangenden Telekommunikationseinrichtung anzupassen. Wird vom MMS-Relay Server ein Objekt eines bestimmten Typs in die MMS Nachricht integriert, der eine Konvertierung durch das WAP-Gateway bedarf, kann das WAP-Gateway seine Aufgabe jedoch nicht ausführen, wodurch das Objekt unverändert zur Telekommunikationseinrichtung gelangt und dort nicht genutzt werden kann.

Weiterhin kann sich eine durch Bildung eines Gesamtprofils, wie es oben beschrieben worden ist, nicht mehr mögliche Unterscheidung zwischen den integralen der Eigenschaften der Telekommunikationseinrichtung (eventuell mit zusätzlicher Hardwarekomponente) und den zusätzlichen Eigenschaften des Systems aus Telekommunikationseinrichtung und WAP-Gateway auch negativ auswirken, wenn z.B. ein Objekt von der Datenbereitstellungskomponente in unterschiedlichen Formaten angeboten werden kann, von denen einige eine Konvertierung durch das WAP-Gateway bedürfen, um von der Telekommunikationseinrichtung verarbeitet werden zu können, und andere unverändert vom WAP-Gateway an die Telekommunikationseinrichtung weitergereicht werden können. Hier ist die serverseitige (d.h. von der Datenbereitstellungskomponente) Wahl eines Formates, das keine Konvertierung durch das WAP-Gateway bedarf, vorteilhaft, da eine Konvertierung die Qualität des Objektes verschlechtern kann, zusätzliche Zeit beim Herunterladen des Objektes für die Konvertierung benötigt wird, Rechenleistung beim WAP-Gateway erfordert und für den Benutzer je nach Abrechnungsmodell zusätzliche Kosten verursachen kann.

Es ist nun die Aufgabe der vorliegenden Erfindung, ein Verfahren, wie es beispielsweise mit Bezug auf Figur 1 beschrieben wurde, derart zu verbessern, damit eine effizientere Übertragung von Nutzdatenobjekt, insbesondere von verschlüsselten oder gepackten Nutzdatenobjekt, ermöglicht wird.

Diese Aufgabe wird durch die unabhängigen Ansprüche gelöst. Vorteilhafte Ausgestaltungen sind Gegenstand der Unteransprüche.

Für ein Verfahren zum Übertragen von Nutzdatenobjekten ist eine Datenbereitstellungskomponente zur Bereitstellung von Nutzdatenobjekten vorgesehen, die Nutzdatenobjekte über eine bzw. zumindest eine Verbindungskomponente zu einer Telekommunikationseinrichtung eines Benutzers gemäß einem Gesamtprofilinformationsobjekt überträgt. Das Gesamtprofilinformationsobjekt gibt dabei an, welcher Typ eines Nutzdatenobjekt an die Telekommunikationseinrichtung zu deren Verarbeitung übertragbar ist. In das Gesamtprofilinformatiönsobjekt wird ferner eine erste Profilinformation eingefügt, die angibt, welcher Typ von Nutzdatenobjekt direkt von der Telekommunikationseinrichtung verarbeitbar ist. Es kann ferner eine zweite Profilinformation eingefügt werden, die angibt, welcher Typ von Nutzdatenobjekt von der Verbindungskomponente in einen von der Telekommunikationseinrichtung verarbeitbaren Typ von Nutzdatenobjekt konvertierbar ist. Diese Profilinformationen, insbesondere die erste Profilinformation, ermöglicht somit für die Datenbereitstellungskomponente eine Auswahl möglichst der Typen von Nutzdatenobjekten für eine Übertragung zu der Telekommunikationseinrichtung zu treffen, die direkt von der Telekommunikationseinrichtung verarbeitbar sind und keine Manipulation oder Konvertierung seitens der Verbindungskomponente bedürfen, um von der Telekommunikationseinrichtung verarbeitet zu werden.

Folglich werden gemäß einer vorteilhaften Ausgestaltung zunächst mit hoher Priorität Nutzdatenobjekte von einem Typ gemäß der ersten Profilinformation von der Datenbereitstellungskomponente zu der Telekommunikationseinrichtung übertragen. Das bedeutet, es wird eine Überprüfung durchgeführt, ob die Datenbereitstellungskomponente Nutzdatenobjekte bereitstellt, welche direkt von der Telekommunikationseinrichtung verarbeitbar sind. Bei erfolgreicher Überprüfung werden derartige Nutzdatenobjekte schließlich zur Telekommunikationseinrichtung übertragen. Bezugnehmend auf ein oben erwähntes Beispiel, bei dem die Telekommunikationseinrichtung in der Lage ist, Bilddaten vom Typ "jpeg" zu verarbeiten, die Verbindungskomponente in der Lage ist, Bilddaten vom Typ "gif" in den Typ "jpeg" zu konvertieren und schließlich die Datenbereitstellungskomponente Bilddaten von Typ "jpeg" und "gif" bereitstellt, wird nun die Datenbereitstellungskomponente, da sie anhand der ersten Profilinformation erkennt, dass die Telekommunikationseinrichtung Bilddaten vom Typ "jpeg" verarbeiten kann, sogleich derartige Bilddaten vom Typ "jpeg" an die Telekommunikationseinrichtung als Nutzdatenobjekte übertragen. Zum einen ist hierbei keine Konvertierung der Bilddaten durch die Verbindungskomponente nötig (es können eventuelle Konvertierungskosten gespart und auch die Übertragungszeit ohne Konvertierung verringert werden) und es ist auch ein Verpacken bzw. Verschlüsseln von Nutzdatenobjekten möglich, da die Datenbereitstellungskomponente nur Nutzdatenobjekte an die Telekommunikationseinrichtung überträgt, von der sie anhand der ersten Profilinformation weiß, dass die Telekommunikationseinrichtung die Nutzdatenobjekt verarbeiten kann.

Ist eine Überprüfung, ob die Datenbereitstellungskomponente Nutzdatenobjekte bereitstellt, welche direkt von der Telekommunikationseinrichtung verarbeitbar sind, negativ, so werden gemäß einer weiteren Ausgestaltung der Erfindung Nutzdatenobjekte von einem Typ gemäß der zweiten Profilinformation mit geringerer Priorität als zuvor von der Datenbereitstellungskomponente zu der Telekommunikationseinrichtung übertragen.

Gemäß einer weiteren vorteilhaften Ausgestaltung überträgt die Telekommunikationseinrichtung vor dem Übertragen von Nutzdatenobjekten von der Datenbereitstellungskomponente zu der Telekommunikationseinrichtung ein erstes Teilprofilinformationsobjekt mit der ersten Profilinformation an die Verbindungskomponente, welche ihrerseits das erste Teilprofilinformationsobjekt um die zweite Profilinformation zu einem zweiten Teilprofilinformationsobjekt ergänzt und dieses zur Datenbereitstellungskomponente übermittelt. Dort kann dann basierend auf dem zweiten Teilprofilinformationsobjekt bzw. allen übermittelten Profilinformationen ein Gesamtprofilinformationsobjekt erstellt werden.

Es ist ferner denkbar, dass die Telekommunikationseinrichtung um eine zusätzliche Leistungskomponente ergänzt wird, die in der Lage ist, den Umfang den von der Telekommunikationseinrichtung verarbeitbaren Nutzdatenobjekten zu erweitern. Eine derartige Leistungskomponente kann beispielsweise eine zusätzliche Hardwarekomponente, wie ein spezielle Farbanzeigeeinrichtung mit hoher Auflösung zum Anzeigen hochaufgelöster und farbiger Bilder oder Graphiken, oder aber auch eine zusätzliche Softwarekomponente oder Softwareanwendung, beispielsweise zum Verarbeiten und Abspielen von Musikdaten im MP3-Format, umfassen. Eine derartige Leistungskomponente kann dann in der Lage sein, Typen von Nutzdatenobjekten zu verarbeiten, die auch schon die Telekommunikationseinrichtung verarbeiten kann, sie kann aber auch in der Lage sein weitere Typen von Nutzdatenobjekten zu verarbeiten, welche die Telekommunikationseinrichtung selbst nicht verarbeiten kann. Folglich kann dann das erste Teilprofilinformationsobjekt um eine dritte Profilinformation ergänzt werden, die angibt, um welche Typen von Nutzdatenobjekten der Umfang der Nutzdatenobjekte der Telekommunikationseinrichtung durch die zusätzliche Leistungskomponente erweitert wird.

Zur Minimierung des zu übertragende Datenvolumens zwischen der Telekommunikationseinrichtung und der Verbindungskomponente (insbesondere, wenn eine Luftschnittstelle dazwischen vorgesehen ist) und/oder zwischen der Verbindungskomponente und der Datenbereitstellungskomponente ist es gemäß einer vorteilhaften Ausgestaltung auch denkbar, in dem ersten und/oder dem zweiten Teilprofilinformationsobjekt die Profilinformationen in Form einer Referenz vorzusehen, welche jeweils zu Profilinformationen verweisen, welche auf der Datenbereitstellungskomponente oder einer mit dieser in Verbindung stehenden weiteren Datenbereitstellungskomponente gespeichert ist. Das bedeutet, in einem Teilprofilinformationsobjekt können lediglich Adressen, wie z.B. eine URL (URL: Uniform Resource Locator) vorgesehen sein, die auf einen Speicherort in der Datenbereitstellungskomponente oder einer anderen Datenbereitstellungskomponente, z.B. einer des Herstellers der Telekommunikationseinrichtung oder der zusätzlichen Leistungskomponente, verweisen. Lediglich beim Erzeugen des Gesamtprofilobjekts muss die Datenbereitstellungskomponente die Adressen anwählen, um die entsprechenden Profilinformation zu erhalten und in das Gesamtprofilobjekt einzufügen.

Gemäß einer weiteren vorteilhaften Ausgestaltung befindet sich die Telekommunikationseinrichtung in einem ersten Telekommunikationsnetz, und die Datenbereitstellungskomponente und/oder die weitere Datenbereitstellungskomponente in einem zweiten Telekommunikationsnetz, wobei das erste und das zweite Telekommunikationsnetz miteinander verbunden sind. Die Verbindungskomponente kann dann in dem ersten oder dem zweiten Telekommunikationsnetz angeordnet sein, oder insbesondere zur Verbindung der beiden Telekommunikationsnetze dienen. Im Falle mehrerer Verbindungskomponenten können die Verbindungskomponenten dann schließlich an den gerade angegebenen Orten angeordnet sein (z.B. kann, wie es später noch erwähnt werden wird, eine Verbindungskomponente als ein WAP-Gateway zur Verbindung der beiden Telekommunikationsnetze dienen, während ein oder mehrere andere Verbindungskomponenten 'beispielsweise als Konvertierungseinheiten von Daten bzw. Nutzdatenobjekten in einem der angegebenen Telekommunikationsnetze vorgesehen sind). Es ist dabei möglich, dass das erste Telekommunikationsnetz als ein Mobilfunknetz ausgebildet ist, das insbesondere gemäß dem GSM (Global System for Mobile Communications)-oder dem UMTS (Universal Mobile Telcommunications System)-Standard betrieben wird. Bei einer derartigen Ausgestaltung eines ersten Telekommunikationsnetzes kann die Übertragung von Nutzdatenobjekten zu der Telekommunikationseinrichtung mittels WAP-Protokollen, insbesondere dem Wireless Session Protokoll, erfolgen. In diesem Zusammenhang kann die Verbindungskomponente zum Verbinden des ersten und des zweiten Telekommunikationsnetzes als ein WAP-Gateway ausgebildet sein. Es ist weiterhin denkbar, dass das zweite Telekommunikationsnetz als ein auf einem Internetprotokoll basierendes Netz ausgebildet ist, in dem die Übertragung von Daten insbesondere mittels dem Hypertext Transfer Protocol erfolgt.

Gemäß einer vorteilhaften Ausgestaltung umfasst die Telekommunikationseinrichtung ein Funkmodul, und ist insbesondere als ein Mobiltelefon, ein Schnurlostelefon, ein tragbarer Computer oder ein Smartphone (eine Kombination aus Mobiltelefon und kleinem tragbaren Computer) ausgebildet.

Gemäß einer weiteren vorteilhaften Ausgestaltung können die Nutzdatenobjekte Textinformationen, Audioinformationen, Videoinformationen, ausführbare Programme, Softwaremodule oder eine Kombination dieser Datenarten enthalten.

Bevorzugte Ausführungsformen der vorliegenden Erfindung werden nachfolgend bezugnehmend auf die beiliegenden Zeichnungen näher erläutert. Es zeigen:
- Figur 1: ein Blockschaltbild mit den bei einem Verfahren zum Übertragen von Nutzdatenobjekten beteiligten Komponenten unter Verwendung von Eigenschaftsprofilen oder User-Agent-Profiles der verschiedenen im Übertragungsweg vorgesehen Komponenten einschließlich des Datenflusses zwischen den Komponenten;
- Figur 2: eine Tabelle zur Kennzeichnung oder Codierung von im Datenübertragungsweg vorgesehen Komponenten in jeweiligen Eigenschaftsprofilen;
- Figur 3: eine Darstellung eines Eigenschaftsprofils in XML (XML: Extensible Markup Language) gemäß einer ersten Ausgestaltung;
- Figur 4: eine Darstellung eines Eigenschaftsprofils in XML gemäß einer zweiten Ausgestaltung.

Im folgenden sollen nun mögliche Ausführungsformen zum Übertragen von Nutzdatenobjekten von einer Datenbereitstellungskomponente über Verbindungskomponente auf eine Telekommunikationseinrichtung, insbesondere ein Mobiltelefon eines Benutzers (im folgenden einfach als ein Endgerät bezeichnet), erläutert werden.

Bei der Erläuterung der bevorzugten Ausführungsformen der Erfindung wird von einer entsprechenden Konfiguration einer Telekommunikationsanordnung ausgegangen, wie sie bereits bezüglich Figur 1 diskutiert worden ist. Eine derartige Telekommunikationsanordnung umfasst auch wieder eine Datenbereitstellungskomponente bzw. einen Datenserver D zum Bereitstellen von Nutzdatenobjekten (sei es verschlüsselt oder unverschlüsselt, in eine Container-Datei bzw. ein Container-Objekt gepackt oder nicht, usw.), eine Verbindungskomponente G zum Weiterleiten von Daten bzw. Nutzdatenobjekten und schließlich eine Telekommunikationseinrichtung bzw. das Endgerät T eines Benutzers. Es wird wiederum davon ausgegangen, dass sich das Endgerät T in einem ersten Telekommunikationsnetz in der Ausgestaltung eines Mobilfunknetzes befindet, in dem die Übertragung von Daten allgemein, insbesondere von Nutzdatenobjekten mittels eines vom WAP-Forum (WAP: Wireless Application Protocol) spezifizierten Protokolls erfolgt. Ferner wird angenommen, dass sich die Datenbereitstellungskomponente eines Daten- oder Inhalteanbieters in einem zweiten Telekommunikationsnetz befindet, das als ein auf einem Internetprotokoll (wie dem http) basierendes Netz ausgebildet ist. Als Verbindungseinrichtung zum Herstellen einer Datenverbindung zwischen dem ersten Telekommunikationsnetz und dem zweiten Telekommunikationsnetz ist die Verbindungskomponente vorgesehen, die bei der beschriebenen Konfiguration als ein sogenanntes WAP-Gateway dient.

Zur Mitteilung der Eigenschaften, insbesondere bezüglich der Verarbeitung bestimmter Nutzdatenobjekte, an die Datenbereitstellungskomponente D, entsprechend dem in Figur 1 gezeigten Verfahren, werden die Eigenschaften in Eigenschaftsprofilen oder "UA-Profs" (UA-Prof: User Agent Profile), welche vorteilhafterweise auf der Metasprache XML (XML - Extensible Markup Language) basieren, dargestellt. XML-basierte Formate eignen sich besonders gut für den Plattform- und Softwareunabhängigen Austausch strukturierter Daten zwischen Programmen und Rechnern bzw. Software- und Hardwarekomponenten unterschiedlicher Hersteller und Systeme.
Ein Profil kann mehrere Komponenten beschreiben (z.B. für Software, Hardware, WAP Push, usw.), wobei jede Komponente mehrere Attribute mit den dazugehörigen Werten enthalten kann (in der Hardware Komponente sind mögliche Attribute beispielsweise Bildschirmgröße, Farbdarstellungsmöglichkeit, usw.). Im Folgenden wird eine prinzipielle Struktur eines Profils gezeigt, so wie es vom WAP-Forum für UA-Prof definiert wurde:
Komponente_1
Attribut_1a = Wert_1a
Attribut_1b = Wert_1b
Komponente_2
Attribut_2a = Wert_2a
Attribut_2b = Wert_2b
Attribut_2c = Wert_2c
Attribut_2d = Wert_2d

Diese Art der Gliederung hat mehrere Vorteile. Alle Komponenten und Attribute können flexibel genutzt werden, die Struktur ist beliebig erweiterbar und erlaubt außerdem anschauliche Darstellungsmöglichkeiten.

Ein Verfahren gemäß einer bevorzugten Ausgestaltung der Erfindung ermöglicht nun serverseitig, d.h. auf Seite der Datenbereitstellungskomponente, eine Unterscheidung zwischen den Eigenschaften des hier WAP-fähigen Endgerätes und den zusätzlichen Eigenschaften der Kombination aus dem WAP-fähigem Endgerät und weiteren im Datenübertragungsweg vorhandenen Komponenten, wie der Verbindungskomponente (im folgenden nur noch als WAP-Gateway bezeichnet). Ausgehend von dem in Figur 1 dargestellten Verfahren, werden die einzelnen Profile bzw. UA-Profs (Basisprofil und Differenzprofile) bezüglich ihrer Herkunft gekennzeichnet, was serverseitig eine Auswertung ermöglicht, welche Konvertierungsfunktionalität eines WAP-Gateways oder eines eventuell vorhandenen zusätzlichen Konvertierungsservers, beispielsweise in dem zweiten Telekommunikationsnetz, bei der Übertragung bzw. Zustellung von Inhalten (bezüglich Nutzdatenobjekten) in einem bestimmten Format genutzt werden kann und welches nicht.

Es existieren verschiedene Möglichkeiten, den Bezug eines Profils bzw. UA-Prof zu kennzeichnen:
a) In einer einfachsten Variante wird durch die Kennzeichnung nur zwischen "Endgerät" und "zwischengeschalteter Instanz" (wie WAP-Gateway) unterschieden. Hierzu können die Profile mit einfachen Markierungen versehen werden, wobei auch die Markierung eines Profiltyps ausreicht, z.B. die Markierung der Profile zwischengeschalteter Instanzen (WAP-Gateway, Konvertierungsserver, usw.). Vorteilhaft an dieser Variante ist, dass endgeräteseitig und auch auf der Luftschnittstelle Änderungen nicht unbedingt erforderlich sind.
b) In einer etwas komplexeren Variante versieht jedes Endgerät bzw. jede Komponente im Übertragungsweg das eigene Profil mit einem individuellen, vorher vereinbarten Code (textuell oder binär). Beispielsweise bedeutet binärer Code "2": "dieses Profil stammt von einem WAP-Gateway". Vorteilhaft sind eine gegenüber Variante a) höhere Gewissheit, aus welcher Quelle ein Profil stammt, da hier jedes Profil gekennzeichnet sein soll. Außerdem kann weiter differenziert werden, wenn statt einer simplen Markierung (Boolsche Aussage) eine größere Wertemenge genutzt wird, durch die z.B. zwischen den Kategorien "WAP-fähiges Endgerät", "WAP-Gateway", "WAP-Proxy" (als weitere Komponente im Übertragsweg) und weiteren Komponenten unterschieden werden kann.
c) Diese Variante baut auf Variante b) auf, enthält aber zusätzlich noch die Information, ob von nachfolgenden Einheiten bzw. Komponenten im Übertragungsweg weitere (Differenz-)Profile übertragen werden dürfen. Für bestimmte Anwendungen wird es somit möglich, die Signalisierung von Konvertierungsmöglichkeiten durch das WAP-Gateway und andere nachfolgende Konvertierungseinheiten zu unterbinden.

Die Anwendung eines Verfahrens gemäß einer Ausgestaltung der Erfindung, wie beispielsweise beim Laden DRM (DRM: Digital Rights Management)-geschützter Objekte und auch bei MMS (MMS: Multi Media Messaging Service) hat den Vorteil, dass die Datenbereitstellungskomponente bzw. der Datenbereitstellungsserver die Eigenschaften des WAP-fähigen Endgerätes allein betrachten kann und nur die dafür geeigneten Objekte bzw. Nutzdatenobjekte versenden kann. Nicht geeignete Objekte werden direkt von der Datenbereitstellungskomponente erkannt und nicht übertragen, der Nutzer bekommt also nicht versehentlich unbrauchbare Objekte zugesandt.

Ist die Datenbereitstellungskomponente in der Lage, Nutzdatenobjekte mit gleichem Inhalt aber verschiedenen Datentyps bereitzustellen, so kann durch eine Kennzeichnung von Eigenschaften in UA-Profs, d.h. eine Zuordnung von Eigenschaften zu einer bestimmten Komponente im Übertragungsweg, bewirken, dass die Datenbereitstellungskomponente mit höherer Priorität gleich ein Nutzdatenobjekt zur Übertragung auswählt, das auch ohne Konvertierung durch eine zwischengeschaltete Komponente im Übertragungsweg, wie dem WAP-Gateway, endgeräteseitig genutzt werden kann. Unnötige Datenformat-Konvertierungen werden damit vermieden.

Nochmals zusammengefasst werden gemäß der dargestellten Ausführungsform Profile und (nach Zusammenführung von Profilen) Profilbestandteile bezüglich ihrer Herkunft und der damit ermöglichten serverseitigen Unterscheidung zwischen Eigenschaften des WAP-fähigen Endgerätes und zusätzlichen Eigenschaften des Gesamtsystems, bestehend aus WAP-fähigem Endgerät, WAP-Gateway und eventuell weiteren Komponenten auf dem Übertragungsweg, die den zu übertragenden Inhalt verändern können, gekennzeichnet. Mit der Kennzeichnung der einzelnen Profile bzw. UA-Profs kann also serverseitig folgende Frage geklärt werden, von welcher Übertragungseinheit (WAP-fähiges Endgerät, WAP-Gateway, zwischengeschalteter Konvertierungseinheit, usw.) das entsprechende Profil stammt. Der Server am Ende der Übertragungskette soll diese zusätzliche Information bei der Auswahl zwischen verschiedenen vorhandenen Datei-Typen und Formaten berücksichtigen. Außerdem hat eine Einheit die Möglichkeit, bei Bedarf ein weiteres Anhängen von Differenzprofilen zu unterbinden.

An dieser Stelle sei noch erwähnt, dass das hierin beschriebene Verfahren nicht auf die hier beispielhaft beschriebenen Ausführungsformen beschränkt ist, sondern auch auf andere WAP-basierte Anwendungen angewendet werden kann.

In folgenden sollen nun detailliert die Vorteile oben dargestellter Prinzipien bezüglich eines Verfahrens zum Übertragen von Nutzdatenobjekten unter Verwendung von Profilen bzw. UA-Profs, insbesondere im Zusammenhang mit der Zustellung DRM-geschützter Objekte, der Zustellung von Multimedianachrichten im Multimedia Messaging Service und beim Browsen auf Basis der vom WAP-Forum spezifizierten Protokolle, dargestellt werden.

Gemäß dem folgenden Beispiel wird angenommen, dass ein WAP-fähiges Endgerät von sich aus keine Standbilder darstellen kann, jedoch durch ein angesteckten Hardware-Modul derartig erweitert ist, dass es auch Standbilder im Format "jpeg" darstellen kann. Wie oben bereits erwähnt, erfolgt die Anbindung des Endgerätes an das Internet über das WAP-Gateway, das ferner in der Lage ist, Standbilder vom Format "gif" in das Format "jpeg" zu konvertieren. Der Unterschied zwischen dem hier beschriebenen Verfahren und dem zu Beginn bezüglich Figur 1 beschriebenen Verfahren besteht nun darin, dass die Profile bezüglich ihrer Herkunft gekennzeichnet sind. Das bedeutet, neben den Fähigkeiten der entsprechenden Endgeräte bzw. Übertragungseinheiten ist zusätzlich auch die Information enthalten, von welchem Endgerät bzw. von welcher Übertragungseinheit, wie dem WAP-Gateway, das jeweilige Differenz-Profil stammt. Diese erweiterten Profile sind im Folgenden mit einem Stern gekennzeichnet. Ansonsten verläuft die Übertragung und Verarbeitung der jeweiligen Profile, wie bereits bezüglich Figur 1 beschrieben ab, weshalb im folgenden für die Erläuterung der einzelnen Schritte bezüglich der erweiterten mit Stern versehenen Profile auf die Erläuterung der Profile ohne Stern verwiesen wird.

Bezugnehmend auf Figur 1 übermittelt das WAP-fähige Endgerät T neben seinem Basis-Profil BP* auch das Differenz-Profil DP3* (vgl. Schritt 5), das die zusätzlichen Fähigkeiten durch das angesteckte Hardware-Modul beschreibt, an das WAP-Gateway G. Dies schickt neben den beiden Profilen des WAP-fähigen Endgerätes (Basis-Profil BP* und Differenz-Profil DP3*) auch sein eigenes Differenzprofil DP2* an die Datenbereitstellungskomponente D (analog zu dem in Figur 1 dargestellten Szenario).

Dadurch hat das letzte Glied in der Übertragungskette bzw. dem Übertragungsweg (hier die Datenbereitstellungskomponente D) bei der Ermittelung des resultierenden Gesamtprofils RP* (entsprechend dem Gesamtprofil) Kenntnis darüber, welche Fähigkeiten das (mit dem Modul erweiterte) WAP-fähige Endgerät T besitzt, nämlich hier die Darstellung von Standbildern des Daten-Formates "jpeg", und welche Fähigkeiten einer zwischengeschalteten Übertragungseinheit zuzuordnen sind, nämlich die Konvertierung von Standbildern des Daten-Formates "gif" in das Daten-Format "jpeg" durch das WAP-Gateway.

Im folgende sei auf die Semantik der Kennzeichnung eingegangen. Von den oben beschriebenen Varianten zur Kennzeichnung der Profile wird im folgenden die Variante c) verwendet, bei der einerseits die Funktion der in dem Profil beschriebenen Einheit (WAP-fähiges Endgerät, WAP-Gateway, usw.) gekennzeichnet wird und andererseits gekennzeichnet wird, ob weitere Profile von nachfolgenden Einheiten der Übertragungskette angefügt werden dürfen.

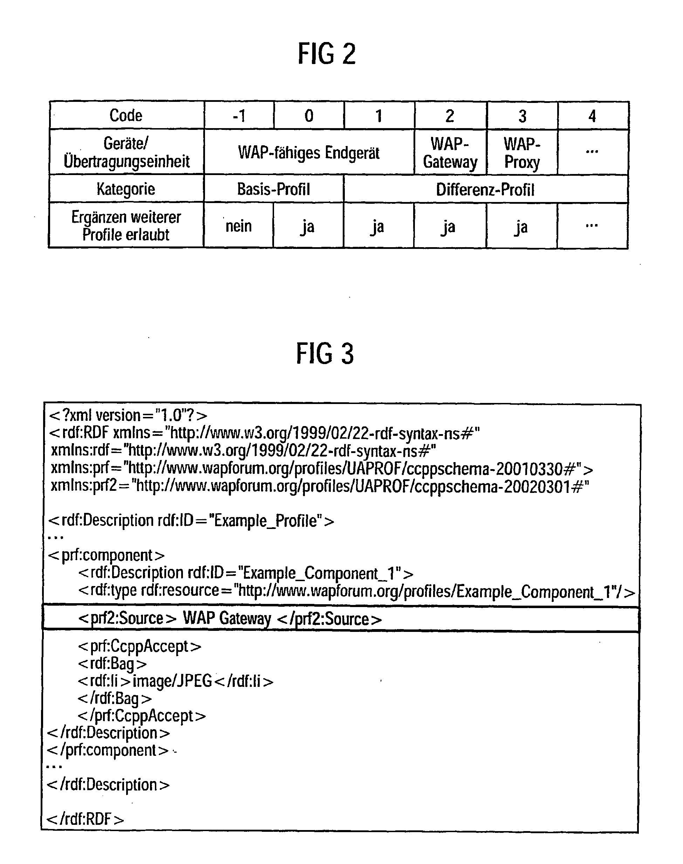

Figur 2 zeigt eine Tabelle gemäß einer vorteilhaften Ausgestaltung einer binären Codierung für das Kennzeichnen von Profilen. Demnach kann ein WAP-fähiges Endgerät sein Basis-Profil entweder mit der binären Kennzeichnung "-1" oder "0" verschicken und damit den anderen Übertragungseinheiten in der Übertragungskette das Übermitteln ihrer Differenz-Profile entweder erlauben oder untersagen. Das nächste Glied in der Übertragungskette (WAP-fähiges Endgerät mit Zusatzmodul, WAP-Gateway, eventuell WAP-Proxy oder Konvertierungsserver, usw.), welches ein Differenz-Profil ergänzen möchte, wertet zunächst das Basis-Profil des WAP-fähigen Endgerätes aus. Falls das Ergänzen von Differenz-Profilen erlaubt ist, kann es nun sein eigenes Differenz-Profil mit einer entsprechenden Kennzeichnung nach Tabelle von Figur 2 übermitteln. Auf diese Weise wäre es dem letzten Glied in der Übertragungskette (d.h. dem Server) möglich, die verschiedenen (Differenz-)Profile unterscheiden zu können.

Unabhängig davon kann jedes Endgerät bzw. jede Übertragungseinheit zusätzlich eine fortlaufende Nummerierung seines Profils vornehmen. In diesem Fall erhielte die Datenbereitstellungskomponente D sogar noch Auskunft über die Reihenfolge der an der Übertragung der Daten beteiligten Netzwerkelemente.

Im folgende sei auf die Syntax der Kennzeichnung eingegangen. Es werden nun ganz allgemein unterschiedliche Möglichkeiten zum Kennzeichnen eines Profils vorgestellt. Dabei wird nicht mehr zwischen Basis-Profil und Differenz-Profil(en) unterschieden. Bei der Kennzeichnung soll dabei vorzugsweise die oben beschriebene Semantik gemäß der Tabelle nach Figur 2 verwendet werden, allerdings ist auch jede andere vorher vereinbarte Semantik denkbar.

Mögliche alternative Ausführungsmöglichkeiten zum Kennzeichnen eines Profils sind:
1. Ein neues Kopf-Feld wird dem zu übertragenden Profil in der entsprechenden Sitzungsschicht (HTTP oder WSP) vorangestellt. Die beiden hier benutzten Sitzungsschicht-Protokolle HTTP und WSP (WSP: Wireless Session Protocol) erlauben nach [8] und [9] die Definition neuer Kopf-Felder und bedienen sich dabei des in [10] beschriebenen textuellen Formates, wonach ein Kopf-Feld aus einem Feld-Namen (obligatorisch) und einem Feld-Wert (optional) besteht. Um auf der Luftschnittstelle nicht zu viel Daten übertragen zu müssen, empfiehlt das WSP [9] für häufig benutze (sogenannte "well-known") Kopf-Felder eine binäre Codierung. So wird beispielsweise aus einem Feld/Attribut "X-Mms-Sender-Visibility: Show" (29 Bytes) die Kurzform "93 11" in hexadezimaler Codierung (zwei Bytes).
   Gemäß einer bevorzugten Ausführungsform der Erfindung wird die Einführung eines neuen Kopf-Feldes zur Kennzeichnung von Profilen vorgeschlagen, das ebenfalls auf dem in [10] beschriebenen Format basieren soll. Der Feld-Name des neuen Kopf-Feldes für die beiden hier verwendeten Protokolle HTTP und WSP könnte beispielsweise "x-wap-profile-source" heißen.
   Die folgende Darstellung zeigt das textuell codierte Kopf-Feld "x-wap-profile-source" links mit einem textuell codierten Feldwert und rechts mit einem binär (dezimal) codierten Feld-Wert:
   x-wap-profile-source: WAP-Gateway; x-wap-profile-source: 2
2. Die Markierung erfolgt direkt im http- bzw. WSP-Headerfeld durch einen zusätzlichen Parameter. Damit ist prinzipiell dieselbe Informationscodierung wie mit dem unter 1. beschriebenen Ansatz möglich. Es wird dazu z.B. die Definition des Headerfeldes "x-wap-profile" um einen Parameter ergänzt, der die serverseitige Zuordnung zu einer Einheit im System ermöglicht.
3. Das Profil wird um ein neues XML-Attribut erweitert. Wie bereits oben erläutert werden vorteilhafterweise sämtliche Profile für ein WAP- UA-Prof basierend auf XML beschrieben. Eigenständige Informationsblöcke bzw. einzelne Informationen werden innerhalb eines Profils mit sogenannten "Tags" (Markierungen) voneinander abgegrenzt. Die meisten dieser Tags treten in XML-Anwendungen paarweise als Start- und End-Befehle auf und geben an, welche Bedeutung der von ihnen eingeschlossene Text hat. Dieser Text kann wiederum durch weitere Tags unterteilt sein, um beispielsweise Listen von Parametern für ein Attribut zu ermöglichen. Die Parameter der einzelnen Tags werden Attribute genannt. Sie werden immer durch Quotierungs-Zeichen ("<" und ">") eingeschlossen.

Figur 3 zeigt die Verwendung des gemäß einer Ausführungsform der Erfindung neu definierten XML-Attributes "Source" (in Fettdruck hervorgehoben; gesamtes neues Element doppelt eingerahmt), das die Kennzeichnung eines Profils (oder einer einzelnen Profil-Komponente) durch ein Endgerät bzw. eine Übertragungseinheit erlaubt. Bei Verwendung eines neuen XML-Attributes muss in dem entsprechenden Profil auch der dazugehörige neue "XML-namespace" referenziert werden, der in diesem Beispiel durch "prf2" gekennzeichnet ist. Der Wert des Attributes Source ist in Figur 3 textuell codiert (WAP GW bzw. WAP Gateway). Denkbar ist auch eine binäre Codierung des Attribut-Wertes nach der Tabelle in Figur 2 (z.B. "WAP Gateway" = "2").

Möchte man zusätzlich eine fortlaufende Nummerierung von Profilen (wie oben beschrieben) mit Hilfe von XML-Attributen realisieren, so bieten sich die folgenden zwei Möglichkeiten an:

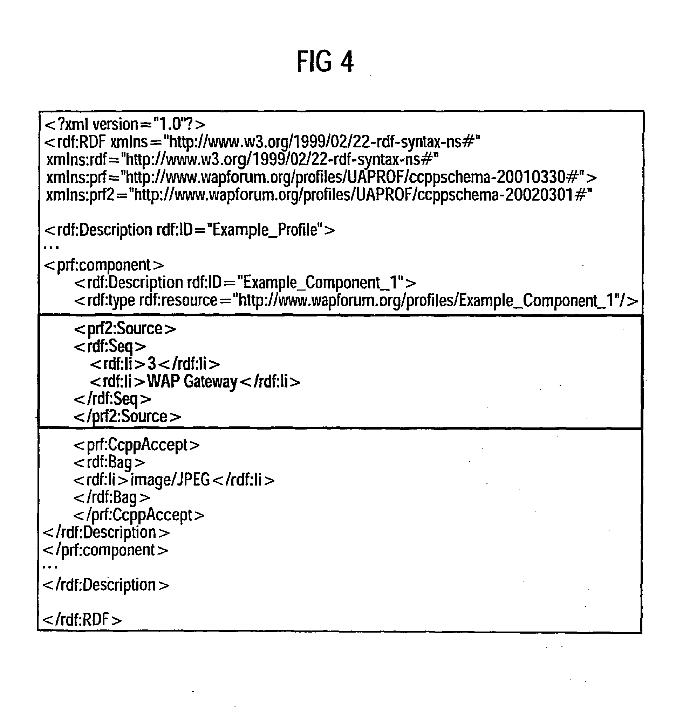

Der Attribut-Wert des Attributes "Source" wird so definiert, dass er aus einer Liste von Parametern mit unterschiedlicher Bedeutung besteht. Figur 4 zeigt dazu ein Beispiel, in dem der Attribut-Wert von "Source" aus einer Liste von zwei Parametern besteht, wobei der einleitend beschriebene Klammer-Mechanismus von Attribut-Werten umgesetzt wurde: Innerhalb des Attributes "Source" wird durch "Bag" signalisiert, dass mehrere Attribut-Werte folgen (erfindungsgemäß neue Elemente sind wieder doppelt eingerahmt). Die Erweiterung "Seq" in den Klammern bedeutet, dass die Reihenfolge der Parameter in der Liste von Bedeutung ist. Per definitionem könnte Parameter 1 beispielsweise für die fortlaufende Nummerierung und Parameter 2 für die Kennzeichnung des Profils durch ein Endgerät oder eine weitere Komponente im Übertragungsweg (z.B. eine Netzwerkeinheit), vorzugsweise durch den in der Tabelle von Figur 2 definierten Code, stehen.

Neben der hier dargestellten textuellen Codierung von UA-Profs bzw. UA-Prof-Dateien erlaubt [7] auch eine binäre Darstellungsweise, in der allen textuellen Attributen sogenannte binäre Token zugeordnet sind. Selbstverständlich lassen sich die oben beschriebenen Prinzipien auch in einer binär codierten UA-Prof-Datei ausdrücken.

Ein oben beschriebenes Verfahren zum Übertragen von Nutzdatenobjekten unter Verwendung von Eigenschaftsprofilen bzw. UA-Profs kann auch für die Übertragung DRM-geschützter Objekte angewendet werden. Werden hierbei in der oben beschriebenen Ausgestaltung der Telekommunikationsanordnung bzw. der Profilübertragung und Verarbeitung der jeweiligen Komponenten der Telekommunikationsanordnung vom WAP-fähigen Endgerät (T; vgl. Figur 1) DRM-geschützte Daten angefordert, sieht der Informationsfluss wie folgt aus:
1. Das WAP-fähige Endgerät (T) sendet eine Daten-Anforderung zunächst an das WAP-Gateway (G). Darin enthalten sind das Basisprofil BP* (es sei für folgende Erläuterung wiederum auf Figur 1 verwiesen) und das Differenzprofil DP3* zur Beschreibung des Zusatzmoduls. Beide Profile sind mit der oben beschriebenen neuen Information gekennzeichnet, dass sie dem WAP-fähigen Endgerät (T) zugeordnet werden können.
2. Das WAP-Gateway (G) erhält die Datenanforderung und leitet sie an die Datenbereitstellungskomponente (D) weiter. Es ergänzt dabei die Datenanforderung um das Differenzprofil DP2*, das gemäß neuer Kennzeichnung dem WAP-Gateway zugeordnet werden kann.
3. Die Datenbereitstellungskomponente (D) erhält die Datenanforderung, wertet die Profilinformationen aus und erkennt, dass das angeforderte Bild vom Endgerät (T) selbst im "jpeg"-Format genutzt werden kann, und dass das WAP-Gateway (G) Bilder vom "gif"-Format in ein für das Endgerät geeignetes Format konvertieren kann (hier kommt nur "jpeg" in Frage). Soll nun das Objekt bzw. Nutzdatenobjekt (das Bild) in DRM-geschützter Form übertragen werden, muss es zunächst in ein anderes Datenformat (z.B. "application/vnd.wap.drm.message oder application/vnd.wap.drm.content") eingepackt bzw. verschlüsselt werden, womit es für das WAP-Gateway (G) unzugänglich wird. Die Datenbereitstellungskomponente (D) entscheidet daher, das Objekt im "jpeg"-Format in das DRM-Format einzupacken, damit eine Bearbeitung des Objektes durch das WAP-Gateway nicht nötig ist. Die Datenbereitstellungskomponente (D) versendet das Objekt bzw. Nutzdatenobjekt im beschriebenen Format an das WAP-Gateway.
4. Das WAP-Gateway empfängt das Objekt, erkennt, dass keine Bearbeitung des Objekts bzw. eine Aktion durch das WAP-Gateway (G) erforderlich ist und sendet es an das Endgerät (T) .
5. Das Endgerät erhält das Objekt, packt es aus und kann es verwenden.

Ohne das oben beschriebene Verfahren gemäß einer Ausgestaltung der Erfindung würde der gleiche Vorgang wie folgt aussehen:
1. Das WAP-fähige Endgerät (T) sendet eine Daten-Anforderung zunächst an das WAP-Gateway (G). Darin enthalten sind das Basisprofil BP und das Differenzprofil DP3 zur Beschreibung des Zusatzmoduls (vgl. wiederum Figur 1).
2. Das WAP-Gateway (G) erhält die Datenanforderung und leitet sie um das Differenzprofil DP2 ergänzt an die Datenbereitstellungskomponente (D) weiter.
3. Die Datenbereitstellungskomponente (D) erhält die Datenanforderung, wertet die Profilinformationen aus und erkennt: Das angeforderte Daten bzw. das angeforderte Bild kann von der Kombination aus Endgerät (T) und WAP-Gateway (G) im "jpeg-Format" und im "gif-Format" genutzt werden. Das Objekt soll in DRM-geschützter Form übertragen werden, und muss dazu zunächst in ein anderes Datenformat (application/vnd.wap.drm.message oder application/vnd.wap.drm.content) eingepackt werden, womit es für das WAP-Gateway unzugänglich wird. Die Datenbereitstellungskomponente (D) entscheidet sich eventuell, das Objekt im "gif"-Format in das DRM-Format einzupacken, und versendet das Objekt im beschriebenen Format an das WAP-Gateway (G).
4. Das WAP-Gateway (G) empfängt das Objekt, erkennt, dass es das Objekt nicht bearbeiten kann, da es das umgebende Datenformat nicht kennt, bzw. nicht verarbeiten kann, verändert das Objekt nicht sendet es an das Endgerät.
5. Das Endgerät (T) erhält das Objekt, packt es aus dem umgebenden Datenformat aus und kann es aber nicht verwenden.

Hintergrundangaben u.a. zu den in der Anmeldung behandelten Protokollen finden sich z.B. an folgenden Stellen:
[1] 3GPP TS 23.040 version 5.2.0, Release 5; Third Generation Partnership Project; Technical Specification Group Terminals;Technical realization of the Short Message Service (SMS).
[2] 3GPP TS 22.140 version 4.1.0, Release 4; Third Generation Partnership Project; Technical Specification Group Services and System Aspects; Service Aspects; Stage 1; Multimedia Messaging Service (MMS).
[3] 3GPP TS 23.140 version 5.1.0, Release 5; Third Generation Partnership Project; Technical Specification Group Terminals; Multimedia Messaging Service (MMS); Functional Description; Stage 2.
[4] WAP-274-MMS Architecture Overview; WAP Multimedia Messaging Service (MMS) Specification Suite 2.0
[5] WAP-275-MMS ClientTransaction; WAP Multimedia Messaging Service (MMS) Specification Suite 2.0
[6] WAP-276-MMS Encapsulation; WAP Multimedia Messaging Service (MMS) Specification Suite 2.0
[7] WAP-248-UAProf; WAG User Agent Profile; October 2001
[8] RFC 2616 "Hypertext Transfer Protocol - HTTP/1.1"; June 1999
[9] WAP-230-WSP Wireless Session Protocol Specification, approved version 5-July-2001
[10] RFC 822 "Standard for the format of ARPA internet text messages"; David H. Crocker; August 13, 1982

## Patentansprüche

1. Verfahren zum Übertragen von Nutzdatenobjekten von einer Datenbereitstellungskomponente (D) zur Bereitstellung von Nutzdatenobjekten über eine Verbindungskomponente (G) zu einer Telekommunikationseinrichtung (T) eines Benutzers gemäß einem Gesamtprofilinformationsobjekt (RP*), das angibt, welcher Typ von Nutzdatenobjekten an die Telekommunikationseinrichtung zu deren Verarbeitung übertragbar ist,
**dadurch gekennzeichnet,**
**dass** in das Gesamtprofilinformationsobjekt ferner eine erste Profilinformation (BP*,DP1*,DP3*) eingefügt wird, die angibt, welcher Typ von Nutzdatenobjekten von der Telekommunikationseinrichtung verarbeitbar ist, und
**dass** die Nutzdatenobjekte von einem Typ gemäß der ersten Profilinformation (BP*,DP1*,DP3*) von der Datenbereitstellungskomponente (D) über die Verbindungskomponente zu der Telekommunikationseinrichtung (T) übertragen werden, wobei die Verbindungskomponente anhand der ersten Profilinformation erkennt, dass keine Bearbeitung der Nutzdatenobjekte von dem Typ gemäß der ersten Profilinformation erforderlich ist, und die Nutzdatenobjekte ohne Bearbeitung weiter zu der Telekommunikationseinrichtung (T) überträgt.

2. Verfahren nach Anspruch 1, bei dem in das Gesamtprofilinformationsobjekt (RP*) eine zweite Profilinformation (DP2*) eingefügt wird, die angibt, welcher Typ von Nutzdatenobjekt von der Verbindungskomponente (G) in einen von der Telekommunikationseinrichtung (T) verarbeitbaren Typ von Nutzdatenobjekt konvertierbar ist.

3. Verfahren nach Anspruch 2, bei dem Nutzdatenobjekte von einem Typ gemäß der zweiten Profilinformation von der Datenbereitstellungskomponente zu der Telekommunikationseinrichtung übertragen werden, wenn von der Datenbereitstellungskomponente keine Nutzdatenobjekte von dem Typ gemäß der ersten Profilinformation bereitgestellt werden.

4. Verfahren nach einem der Ansprüche 2 bis 3, bei dem vor dem Übertragen von Nutzdatenobjekten von der Datenbereitstellungskomponente (D) zu der Telekommunikationseinrichtung (T) die Telekommunikationseinrichtung ein erstes Teilprofilinformationsobjekt mit der ersten Profilinformation (BP*, DP1*) an die Verbindungskomponente (G) überträgt, welche ihrerseits das erste Teilprofilinformationsobjekt um die zweite Profilinformation (DP2*) zu einem zweiten Teilprofilinformationsobjekt ergänzt und dieses zur Datenbereitstellungskomponente übermittelt, damit dort basierend auf allen übermittelten Profilinformationen ein Gesamtprofilinformationsobjekt (RP*) erstellbar ist.

5. Verfahren nach einem der Ansprüche 4, bei dem die Telekommunikationseinrichtung um eine zusätzliche Leistungskomponente ergänzt wird, die in der Lage ist, den Umfang den von der Telekommunikationseinrichtung verarbeitbaren Nutzdatenobjekten zu erweitern.

6. Verfahren nach Anspruch 5, bei dem das erste Teilprofilinformationsobjekt um eine dritte Profilinformation (DP3*) ergänzt wird, die angibt, um welche Typen von Nutzdatenobjekten der Umfang der Nutzdatenobjekte der Telekommunikationseinrichtung durch die zusätzliche Leistungskomponente erweitert wird.

7. Verfahren nach einem der Ansprüche 4 bis 6, bei dem in dem ersten und/oder dem zweiten Teilprofilinformationsobjekt die Profilinformationen in Form einer Referenz vorgesehen sind, welche jeweils zu Profilinformationen verweisen, welche auf der Datenbereitstellungskomponente oder einer mit dieser in Verbindung stehenden weiteren Datenbereitstellungskomponente gespeichert ist.

8. Verfahren nach einem der Ansprüche 1 bis 7, bei dem sich die Telekommunikationseinrichtung (T) in einem ersten Telekommunikationsnetz, und die Datenbereitstellungskomponente (D) und/oder eine mit dieser in Verbindung stehenden weiteren Datenbereitstellungskomponente in einem zweiten Telekommunikationsnetz befinden, wobei das erste und das zweite Telekommunikationsnetz miteinander verbunden sind.

9. Verfahren nach Anspruch 8, bei dem die Verbindungskomponente (G) in dem ersten oder dem zweiten Telekommunikationsnetz angeordnet ist, oder zur Verbindung der beiden Telekommunikationsnetze vorgesehen ist.

10. Verfahren nach Anspruch 8 oder 9, bei dem das erste Telekommunikationsnetz als ein Mobilfunknetz ausgebildet ist.

11. Verfahren nach Anspruch 10, bei dem das Mobilfunknetz gemäß dem GSM- und oder dem UMTS-Standard betrieben wird.

12. Verfahren nach Anspruch 10 oder 11, bei dem die Übertragung von Nutzdatenobjekten zu der Telekommunikationseinrichtung (T) in dem ersten Telekommunikationsnetz mittels WAP-Protokollen erfolgt.

13. Verfahren nach einem der Ansprüche 8 bis 12, bei dem das zweite Telekommunikationsnetz als ein auf einem Internetprotokoll basierendes Netz ausgebildet ist.

14. Verfahren nach einem der Ansprüche 1 bis 13,
bei dem die Telekommunikationseinrichtung (T) ein Funkmodul umfasst, und als ein Mobiltelefon, ein Schnurlostelefon, ein tragbarer Computer oder ein Smartphone ausgebildet ist.

15. Verfahren nach einem der Ansprüche 1 bis 14,
bei dem die Verbindungskomponente (G) als ein WAP-Gateway ausgebildet ist.

16. Verfahren nach einem der Ansprüche 1 bis 15,
bei dem die Nutzdatenobjekte Textinformationen, Audioinformationen, Videoinformationen, ausführbare Programme, Softwaremodule oder eine Kombination dieser Informationen enthalten.

17. Telekommunikationsanordnung umfassend:
eine Telekommunikationseinrichtung (T) eines Benutzers,
eine Datenbereitstellungskomponente (D) zur Bereitstellung von Nutzdatenobjekten, die dafür eingerichtet ist, Nutzdatenobjekte gemäß einem Gesamtprofilinformationsobjekt (RP*), das angibt, welcher Typ von Nutzdatenobjekten an die Telekommunikationseinrichtung zu deren Verarbeitung übertragbar ist, zu übertragen, und
eine Verbindungskomponente (G) zum Übertragen von Nutzdatenobjekten von der Datenbereitstellungskomponente zu der Telekommunikationseinrichtung,
**dadurch gekennzeichnet,**
**dass** in das Gesamtprofilinformationsobjekt ferner eine erste Profilinformation (BP*,DP1*,DP3*) eingefügt ist, die angibt, welcher Typ von Nutzdatenobjekten von der Telekommunikationseinrichtung verarbeitbar ist, und
**dass** die Verbindungskomponente derart eingerichtet ist, anhand der ersten Profilinformation zu erkennen, dass bei Nutzdatenobjekten, die gemäß der ersten Profilinformation von der Telekommunikationseinrichtung verarbeitbar sind, keine Bearbeitung der Nutzdatenobjekte erforderlich ist, und entsprechend die Nutzdatenobjekte ohne Bearbeitung weiter zu der Telekommunikationseinrichtung (T) zu übertragen.

## Claims

1. Method for the transmission of user data objects from a data supply component (D) to supply user data objects via a connection component (G) to a terminal (T) of a user in accordance with a resulting profile information object (RP*) which specifies which type of user data objects can be transmitted to the terminal for it to process,
**characterized in that**,
in the resulting profile information a first item of profile information (BP*, DP1*, DP3*) is further inserted which specifies which type of user data objects can be processed by the terminal, and
user data objects of a type in accordance with the first profile information (BP*, DP1*, DP3*) are transmitted from the data supply component (D) via the connection component to the terminal (T), whereby the connection component detects on the basis of the first profile information that no processing of the user data objects of the type in accordance with the first profile information is required, and transfers the user data objects on to the terminal (T) without processing them.

2. Method in accordance with claim 1, in which a second item of profile information (DP2*) is inserted into the resulting profile information object (RP*) which specifies which type of user data object can be converted by the connection component (G) into a type of user data object which can be processed by the terminal (T).

3. Method in accordance with claim 2, in which user data objects of a type in accordance with the second profile information are transmitted from the data supply component to the terminal if no user data objects of the type in accordance with the first profile information can be provided by the data supply component.

4. Method in accordance with one of the claims 2 to 3 in which, before the transmission of user data objects from the data supply component (D) to the terminal (T), the terminal transmits a first sub-profile information object with the first profile information (BP*, DP1*) to the connection component (G) which for its part supplements the first sub-profile information object by the second profile information (DP2*) to form a second sub-profile information object and transmits this to the data supply component so that there, based on all transmitted profile information, a resulting profile information object (RP*) can be created.

5. Method in accordance with claim 4, in which the terminal is supplemented by an additional service component which is in a position to expand the scope of the user data objects able to be processed by the terminal.

6. Method in accordance with claim 3, in which the first sub-profile information object is expanded by a third item of profile information (DP3*) which specifies the types of user data objects by which the scope of user data objects of the terminal is expanded by the additional service component.

7. Method in accordance with one of the claims 4 to 6, in which, in the first and/or the second sub-profile information object, the profile information is provided in the form of a reference which refers in each case to profile information which is stored on the data supply component or on a further data supply component connected to it.

8. Method in accordance with one of the claims 1 to 7, in which the terminal (T) is located in a first telecommunication network and the data supply component (D) and/or a further data supply component connected to it are located in a second telecommunication network, with the first and the second telecommunication networks being connected to each other.

9. Method in accordance with claim 8, in which the connection component (G) is arranged in the first or the second telecommunication network or is intended to connect the two networks together.

10. Method in accordance with claim 8 or 9, in which the first telecommunication network is embodied as a mobile radio network which is operated in particular in accordance with the GSM and/or the UMTS Standard.

11. Method in accordance with claim 10, in which the mobile radio network is operated in accordance with the GSM or the UMTS standard.

12. Method in accordance with claim 10, in which user data objects are transmitted to the terminal (T) in the first telecommunication network by means of WAP protocols.

13. Method in accordance with one of the claims 8 to 12, in which the second telecommunication network is embodied as a network based on an Internet protocol.

14. Method in accordance with one of the claims 1 to 13,
in which the terminal (T) comprises a radio module and is embodied in particular as a mobile telephone, a cordless telephone, a portable computer or a smartphone.

15. Method in accordance with one of the claims 1 to 14,
in which the connection component (G) is embodied as a WAP gateway.

16. Method in accordance with one of the claims 1 to 15,
in which the user data objects contain text information, audio information, video information, executable programs, software modules or a combination of this information.

17. Telecommunications arrangement comprising:
A terminal (T) of a user, a data supply component (D) for supplying user data objects which is set up for transmission of user data objects in accordance with an overall information profile object (RP*) which specifies which type of user data object can be transmitted to the terminal for processing, and a connection component (G) for transmitting user data objects from the data supply component to the terminal,
**characterized in that**
in the resulting profile information a first item of profile information (BP*, DP1*, DP3*) is further inserted which specifies which type of user data objects can be processed by the terminal, and
the connection component is set up so as to detect, on the basis of the first profile, that for user data objects which are able to be processed by the terminal in accordance with the first profile information, no processing of the user data objects is required, an accordingly to forward the user data objects to the terminal (T) without processing them.

## Revendications

1. Procédé de transmission d'objets de données utiles d'une composante de mise à disposition de données (D) pour la mise à disposition d'objets de données utiles via une composante de connexion (G) vers un dispositif de télécommunications (T) d'un utilisateur conformément à un objet d'information de profil global (RP*) qui indique quel type d'objets de données utiles peut être transmis au dispositif de télécommunications pour le traitement de ceux-ci,
**caractérisé en ce qu'**est en outre insérée, dans l'objet d'information de profil global, une première information de profil (BP*, DP1*, DP3*) qui indique quel type d'objets de données utiles peut être traité par le dispositif de télécommunications et **en ce que** les objets de données utiles d'un type conforme à la première information de profil (BP*, DP1*, DP3*) sont transmis de la composante de mise à disposition de données (D) via la composante de connexion vers le dispositif de télécommunications (T), la composante de connexion reconnaissant, à l'aide de la première information de profil, qu'aucune manipulation des objets de données utiles du type conforme à la première information de profil n'est nécessaire et transmettant les objets de données utiles sans manipulation au dispositif de télécommunications (T).

2. Procédé selon la revendication 1, dans lequel est insérée, dans l'objet d'information de profil global (RP*), une deuxième information de profil (DP2*) qui indique quel type d'objet de données utiles peut être converti par la composante de connexion (G) en un type d'objet de données utiles traitable par le dispositif de télécommunications (T).

3. Procédé selon la revendication 2, dans lequel des objets de données utiles d'un type conforme à la deuxième information de profil sont transmis de la composante de mise à disposition de données vers le dispositif de télécommunications lorsque la composante de mise à disposition de données ne met pas à disposition des objets de données utiles du type conforme à la première information de profil.

4. Procédé selon l'une des revendications 2 à 3, dans lequel, avant la transmission d'objets de données utiles de la composante de mise à disposition de données (D) vers le dispositif de télécommunications (T), le dispositif de télécommunications transmet un premier objet d'information de profil partiel avec la première information de profil (BP*, DP1*) à la composante de connexion (G) qui, de son côté, complète le premier objet d'information de profil partiel par la deuxième information de profil (DP2*) pour obtenir un deuxième objet d'information de profil partiel et transmet celui-ci à la composante de mise à disposition de données pour que, sur la base de toutes les informations de profil transmises, un objet d'information de profil global (RP*) puisse y être créé.

5. Procédé selon l'une des revendications 4, dans lequel le dispositif de télécommunications est complété par une composante de prestation additionnelle qui est en mesure d'élargir l'étendue des objets de données utiles traitables par le dispositif de télécommunications.

6. Procédé selon la revendication 5, dans lequel le premier objet d'information de profil partiel est complété par une troisième information de profil (DP3*) qui indique par quels types d'objets de données utiles l'étendue des objets de données utiles du dispositif de télécommunications est élargie par la composante de prestation supplémentaire.

7. Procédé selon l'une des revendications 4 à 6, dans lequel sont prévues, dans le premier et/ou le deuxième objet d'information de profil partiel, les informations de profil sous la forme d'une référence, laquelle renvoie respectivement à des informations de profil qui sont stockées sur la composante de mise à disposition de données ou une autre composante de mise à disposition de données connectée à celle-ci.

8. Procédé selon l'une des revendications 1 à 7, dans lequel le dispositif de télécommunications (T) se trouve dans un premier réseau de télécommunications et la composante de mise à disposition de données (D) et/ou une autre composante de mise à disposition de données connectée à celle-ci se trouvent dans un deuxième réseau de télécommunications, les premier et deuxième réseaux de télécommunications étant interconnectés.

9. Procédé selon la revendication 8, dans lequel la composante de connexion (G) est située dans le premier ou dans le deuxième réseau de télécommunications ou est prévue pour relier les deux réseaux de télécommunications.

10. Procédé selon la revendication 8 ou 9, dans lequel le premier réseau de télécommunications est configuré en tant que réseau radio mobile.

11. Procédé selon la revendication 10, dans lequel le réseau radio mobile est exploité conformément au standard GSM ou UMTS.

12. Procédé selon la revendication 10 ou 11, dans lequel la transmission d'objets de données utiles au dispositif de télécommunications (T) se fait, dans le premier réseau de télécommunications, au moyen de protocoles WAP.

13. Procédé selon l'une des revendications 8 à 12, dans lequel le deuxième réseau de télécommunications est configuré en tant que réseau basé sur un protocole internet.

14. Procédé selon l'une des revendications 1 à 13, dans lequel le dispositif de télécommunications (T) comprend un module radio et est configuré en tant que téléphone mobile, téléphone sans fil, ordinateur portable ou smartphone.

15. Procédé selon l'une des revendications 1 à 14, dans lequel la composante de connexion (G) est configurée en tant que passerelle WAP.

16. Procédé selon l'une des revendications 1 à 15, dans lequel les objets de données utiles contiennent des informations textuelles, des informations audio, des informations vidéo, des programmes exécutables, des modules logiciels ou une combinaison de ces informations.

17. Ensemble de télécommunications, comprenant
- un dispositif de télécommunications (T) d'un utilisateur,
- une composante de mise à disposition de données (D) pour mettre à disposition des objets de données utiles, laquelle est aménagée pour transmettre des objets de données utiles conformément à un objet d'information de profil global (RP*) qui indique quel type d'objets de données utiles peut être transmis au dispositif de télécommunications pour le traitement de ceux-ci et
- une composante de connexion (G) pour transmettre des objets de données utiles de la composante de mise à disposition de données vers le dispositif de télécommunications,
**caractérisé en ce qu'**est en outre insérée, dans l'objet d'information de profil global, une première information de profil (BP*, DP1*, DP3*) qui indique quel type d'objets de données utiles peut être traité par le dispositif de télécommunications et **en ce que** la composante de connexion est aménagée de manière telle qu'elle reconnaît, à l'aide de la première information de profil, que, pour des objets de données utiles qui, conformément à la première information de profil, peuvent être traités par le dispositif de télécommunications, aucune manipulation des objets de données utiles n'est requise, et qu'elle transmet en conséquence les objets de données utiles sans manipulation au dispositif de télécommunications (T).
